# DEMANDE DE BREVET EUROPEEN

(11) **EP 1 712 430 A2**
(43) Date de publication de la demande: **18.10.2006**
(21) Numéro de dépôt: 06300367.7
(22) Date de dépôt: 13.04.2006
(51) Int. Cl.: B60R 21/16

(54) **Véhicule comprenant un dispositif de sac gonflable**

(30) Priorité: 14.04.2005 FR 0503730
(71) Demandeur: Renault SAS, 92100 Boulogne Billancourt (FR)
(72) Inventeur: Bernard, Gaël, 78280 Guyancourt (FR); Le Bras, Yann, 78370 Maurepas (FR); Chatelain, Eric, 91210 Draveil (FR); Joose, Pascal, 78500 Sartrouville (FR)

(57) **Abrégé**

Véhicule comprenant un dispositif de sac gonflable 8 comportant un élément gonflable 9 dont un bord supérieur est fixé le long d'un élément latéral de structure du véhicule et au moins une sangle 12, dont une première extrémité est reliée à l'élément gonflable 9 et une deuxième extrémité est reliée à un point de fixation 14, le sac gonflable 8 pouvant, sous l'effet d'un choc, passer d'une position de repos, dans laquelle l'élément gonflable 9 est replié le long de l'élément de structure et la première extrémité de la sangle 12 est située à un premier point, à une position d'utilisation, dans laquelle l'élément gonflable 9 est déployé à l'aplomb de l'élément de structure et la deuxième extrémité de la sangle 12 est située à un deuxième point de façon que les premier et deuxième points et le point de fixation 14, localisé dans une zone se trouvant sous l'élément de structure et en dehors d'une zone de déploiement du sac gonflable 8, forment une zone triangulaire, le dispositif comportant un élément de guidage 15 de la sangle 12 se trouvant dans la zone triangulaire.

## Description

La présente invention relève du domaine des sacs gonflables, en général destinés à être utilisés dans un véhicule à moteur, tel qu'une automobile, pour la protection des conducteur et passagers contre les chocs. Les sacs gonflables sont souvent disposés devant le conducteur, devant le passager voisin du conducteur, et sur les côtés pour la protection contre les chocs latéraux.

Différents types de sacs gonflables de protection, également connus sous le terme « airbag », ont été proposés pour la protection des passagers d'une automobile. En particulier, le document US 6 695 347 décrit un sac gonflable latéral prévu pour venir se placer à l'état gonflé entre un utilisateur, conducteur ou passager, et la portière ou vitre de portière adjacente.

Initialement, le sac gonflable est stocké à l'état rangé dans le toit du véhicule, à proximité du bord supérieur de l'ouverture des portières. En cas d'accident, typiquement dû à un choc latéral ou à un renversement du véhicule, le sac est gonflé et forme un coussin allongé longitudinalement et substantiellement vertical depuis le toit du véhicule vers le bas. Il est prévu en outre une sangle dont une extrémité est fixée à une région supérieure du sac gonflable et dont l'autre extrémité est fixée à la caisse du véhicule. La sangle passe de façon amovible dans une ouverture adjacente à une extrémité longitudinale du sac gonflable au voisinage d'une région inférieure dudit sac gonflable.

Toutefois, la demanderesse s'est aperçue qu'une telle sangle n'assurait pas toujours un guidage satisfaisant du sac gonflable, et pouvait être perturbée par l'architecture du véhicule.

La présente invention vise à remédier à cet inconvénient.

La présente invention propose un sac gonflable dont la trajectoire de gonflage est optimisée.

Le véhicule comprend un dispositif de sac gonflable comportant un élément gonflable dont un bord supérieur est fixé le long d'un élément latéral de structure du véhicule et au moins une sangle, dont une première extrémité est reliée à l'élément gonflable et une deuxième extrémité est reliée à un point de fixation, le sac gonflable pouvant, sous l'effet d'un choc, passer d'une position de repos, dans laquelle l'élément gonflable est replié le long de l'élément de structure et la première extrémité de la sangle est située à un premier point, à une position d'utilisation, dans laquelle l'élément gonflable est déployé à l'aplomb de l'élément de structure et la deuxième extrémité de la sangle est située à un deuxième point de façon que les premier et deuxième points et le point de fixation, localisé dans une zone se trouvant sous l'élément de structure et en dehors d'une zone de déploiement du sac gonflable, forment une zone triangulaire. Le dispositif comporte un élément de guidage de la sangle se trouvant dans la zone triangulaire. On évite ainsi un déploiement incomplet ou de travers du sac gonflable.

Dans un mode de réalisation, le point de fixation est solidaire de la structure du véhicule.

Avantageusement, le point de fixation, l'élément de guidage et au moins une partie de la sangle sont recouverts par une garniture pourvue d'une fente permettant à la sangle de se déployer lors du passage du sac gonflable de sa position de repos à sa position d'utilisation.

Dans un mode de réalisation, l'élément de guidage est porté par la structure du véhicule.

Dans un mode de réalisation, l'élément de guidage est porté par la garniture.

Dans un mode de réalisation, l'élément de guidage est disposé sous les connecteurs.

Dans un mode de réalisation, la deuxième extrémité de la sangle est disposée au-delà d'une extrémité de l'élément gonflable. Le dispositif comprend en général un élément de gonflage de l'élément gonflable.

Avantageusement, la première extrémité de la sangle et l'élément de guidage sont recouverts par un garniture pourvue d'une fente, permettant à la sangle de se déployer lors du gonflement de l'élément gonflable. La fente de la garniture peut être inclinée par rapport à l'horizontale pour se rapprocher de la trajectoire de la sangle en l'absence de garniture. La garniture cache l'élément de guidage et au moins une grande partie de la sangle, tout permettant le déplacement de la sangle vers le bas lorsque le sac gonflable passe de l'état rangé à l'état gonflé. Les termes « avant » et « arrière » sont ceux couramment utilisés pour une automobile, en référence à son sens habituel de déplacement.

La présente invention sera mieux comprise à la lecture de la description détaillée d'un mode de réalisation pris à titre d'exemple nullement limitatif et illustré sur les figures suivantes:

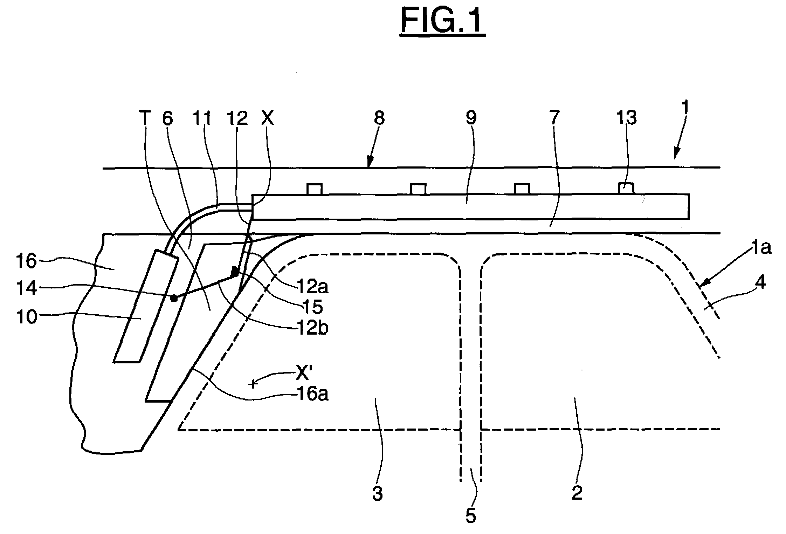

- la figure 1 est une vue schématique de l'intérieur d'une automobile équipée d'un dispositif de sac gonflable à l'état de repos ;
- la figure 2 est une vue correspondante à la figure 1 à l'état déployé ; et
- la figure 3 est une vue en perspective de l'intérieur d'une automobile.

Une partie d'un véhicule à moteur 1 est illustrée sur la figure et est pourvue d'une caisse 1a, d'une portière avant 2 et d'une portière arrière 3. La caisse 1a comprend un montant avant 4 disposé à l'avant de la portière avant 2, un montant intermédiaire 5 disposé entre les portières 2 et 3, un montant arrière 6 disposé à l'arrière de la portière arrière 3, et un toit 7 supporté par les montants 4, 5 et 6. Le bas de la caisse 1a formant un châssis n'est pas représenté pour des raisons de simplicité du dessin.

Le véhicule 1 est équipé d'un coussin gonflable 8 pourvu d'un élément gonflable 9, d'un élément de gonflage 10, par exemple un générateur de gaz, d'une conduite 11 disposée entre l'élément de gonflage 10 et l'élément gonflable 9, et d'une sangle de guidage 12. L'élément gonflable 9 est généralement réalisé en matériau synthétique mince et souple.

En position de repos, l'élément gonflable 9 dont un bord supérieur est fixé au toit 7 du véhicule 1 par des moyens de support tels qu'une pluralité de pattes d'attache 13, est replié de façon qu'il s'étende longitudinalement à proximité de l'extrémité supérieure des portières 2 et 3. L'élément gonflable 9 peut être caché par une garniture de toit non représentée. L'élément de gonflage 10 peut être fixé au montant 6.

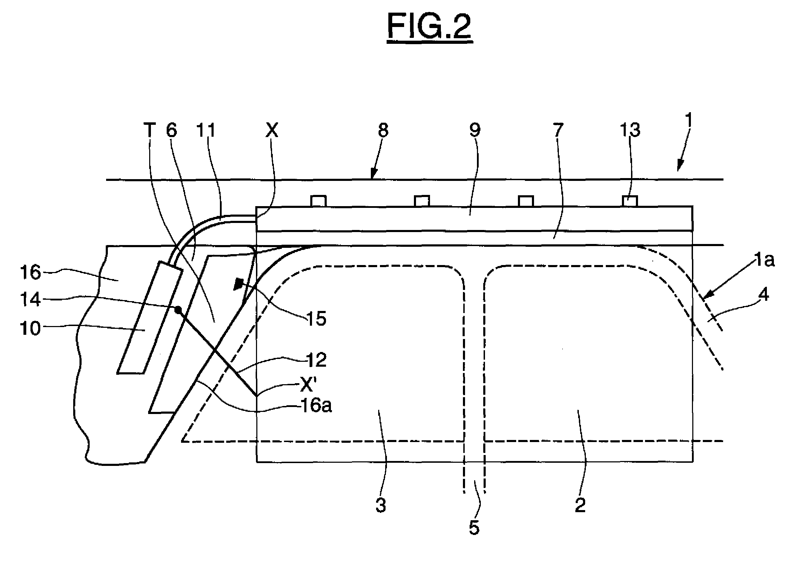

Tel que représenté sur la figure 2, en position déployée, l'élément gonflable 9 comprend une partie supérieure fixée aux pattes 13 et une partie inférieure à l'arrière de laquelle se raccorde la sangle 12. La sangle 12 comprend une extrémité fixée à un bord latéral de l'élément gonflable 9 et une autre extrémité fixée à un point de fixation 14 du montant arrière 6 à une hauteur comprise entre 1/3 et 2/3 de la hauteur de la vitre de la portière arrière 3.

En position de repos, la sangle 12 est dirigée vers le haut à partir du point de fixation 14. Au contraire, en position déployée, la sangle 12 s'étend vers le bas à partir du point de fixation 14.

Il est également prévu un élément de guidage 15 fixé sur le montant arrière 6 disposé en avant et vers le bas par rapport à une ligne fictive passant par les deux extrémités de la sangle 12 en position de repos, à proximité du bord arrière de la vitre de la portière arrière 3. La sangle 12 en position de repos passe en appui sur le bord avant de l'élément de guidage 15, de telle sorte que ladite sangle 12 comprend deux segments formant un angle ouvert entre eux, le segment supérieur 12a allant de l'extrémité de la sangle 12 fixée à l'élément gonflable 9 jusqu'à l'élément de guidage 15 et le segment inférieur 12b s'étendant de l'élément de guidage 15 au point de fixation 14. L'angle formé entre le segment supérieur 12a et le segment inférieur 12b peut être compris entre 90 et 160°, par exemple de l'ordre de 120°.

En position déployée de l'élément gonflable 9, la sangle est éloignée de l'élément de guidage 15 et orientée vers le bas à partir du point de fixation 14.

L'élément de gonflage 10, le point de fixation 14 et l'élément de guidage 15 peuvent être recouverts par une garniture 16. La garniture 16, réalisée en matériau synthétique, possède un bord avant pourvu d'une fente oblique 16a, à proximité de la portière arrière 3 en longeant la découpe de ladite portière arrière 3. En position de repos, la sangle 12 est cachée par la garniture 16, au moins en majeure partie. En position déployée, la sangle 12 fait saillie par la fente 16a, à l'avant de la garniture 16 et s'étend au voisinage de la vitre de la portière arrière 3.

Au cours du mouvement de déploiement de l'élément gonflable 9, après que l'élément de gonflage 10 eut été activé, la sangle 12 assure un déploiement régulier de l'élément gonflable 9, en évitant que le bord arrière de l'élément gonflable 9, auquel est attachée la sangle 12, ne se déplace trop vers l'avant, ce qui risquerait de s'avérer nuisible à la protection d'un passager arrière du véhicule. La sangle 12 peut également éviter que l'élément gonflable 9 ne se déplace de façon excessive vers l'arrière, en début de gonflage, grâce à la présence de l'élément de guidage 15 qui empêche un tel mouvement. L'élément gonflable 9 doit donc se déployer en restant devant l'élément de guidage 15.

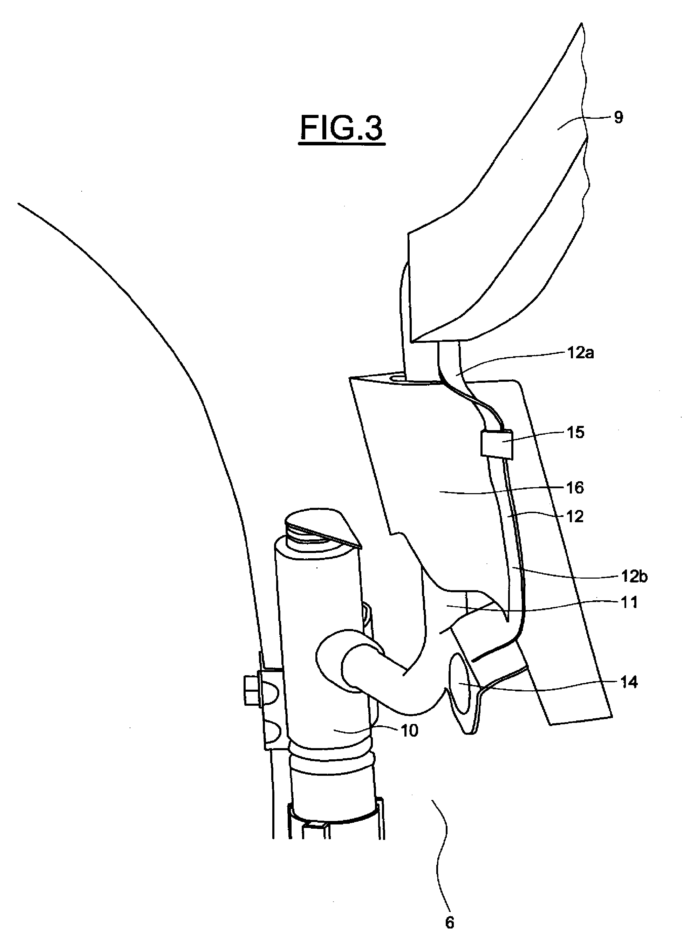

Dans le mode réalisation illustré sur la figure 3, la conduite 11 de l'élément de gonflage passe sous la garniture 16. La sangle 12 est fixée au point de fixation 14 supporté par le montant arrière 6, passe par l'élément de guidage 15 et rejoint l'élément gonflable 9.

Dans l'exemple illustré, l'automobile 1 comprend quatre ou cinq portes. Bien entendu, le coussin gonflable 8 peut être disposé dans un véhicule à deux ou trois portes.

## Revendications

1. Véhicule comprenant un dispositif de sac gonflable (8) comportant un élément gonflable (9) dont un bord supérieur est fixé le long d'un élément latéral de structure du véhicule et au moins une sangle (12), dont une première extrémité est reliée à l'élément gonflable (9) et une deuxième extrémité est reliée à un point de fixation (14), le sac gonflable (8) pouvant, sous l'effet d'un choc, passer d'une position de repos, dans laquelle l'élément gonflable (9) est replié le long de l'élément de structure et la première extrémité de la sangle (12) est située à un premier point (X), à une position d'utilisation, dans laquelle l'élément gonflable (9) est déployé à l'aplomb de l'élément de structure et la deuxième extrémité de la sangle (12) est située à un deuxième point (X') de façon que les premier et deuxième points (X), (X') et le point de fixation (14), localisé dans une zone se trouvant sous l'élément de structure et en dehors d'une zone de déploiement du sac gonflable (8), forment une zone triangulaire (T), **caractérisé en ce que** le dispositif comporte un élément de guidage (15) de la sangle (12) se trouvant dans la zone triangulaire (T).

2. Véhicule selon la revendication 1, dans lequel le point de fixation (14) est solidaire de la structure du véhicule.

3. Véhicule selon l'une quelconque des revendications précédentes, dans lequel le point de fixation (14), l'élément de guidage (15) et au moins une partie de la sangle (12) sont recouverts par une garniture (16) pourvue d'une fente (16a) permettant à la sangle de se déployer lors du passage du sac gonflable (8) de sa position de repos à sa position d'utilisation.

4. Véhicule selon l'une quelconque des revendications précédentes, dans lequel l'élément de guidage (15) est porté par la structure du véhicule.

5. Véhicule selon l'une quelconque des revendications 1 à 3, dans lequel l'élément de guidage (15) est porté par la garniture (16).
